Europäisches Patentamt

European Patent Office

Office européen des brevets

(19)

(11) Veröffentlichungsnummer: **0 095 071**
**B1**

(12) **EUROPÄISCHE PATENTSCHRIFT**

(45) Veröffentlichungstag der Patentschrift:
10.07.85

(51) Int. Cl.⁴: **C 05 B 15/00**

(21) Anmeldenummer: 83104408.6

(22) Anmeldetag: 05.05.83

(54) Blattdüngemittel.

(30) Priorität: 13.05.82 DE 3218028

(43) Veröffentlichungstag der Anmeldung:
30.11.83 Patentblatt 83/48

(45) Bekanntmachung des Hinweises auf die Patenterteilung:
10.07.85 Patentblatt 85/28

(84) Benannte Vertragsstaaten:
AT BE CH DE FR GB IT LI LU NL SE

(56) Entgegenhaltungen:
EP - A - 0 054 768
EP - A - 0 054 769
EP - A - 0 054 770
DE - A - 1 492 652
DE - A - 1 958 971
DE - B - 1 053 299
DE - B - 1 617 679
DE - B - 1 617 680
FR - A - 2 065 610
US - A - 4 169 716

CHEMICAL ABSTRACTS, Band 98, Nr. 5, 31. Januar
1983, Seite 592, Nr. 33819a, Columbus, Ohio, USA

(73) Patentinhaber: A. Nattermann & Cie. GmbH,
Nattermannallee 1, D-5000 Köln 30 (DE)

(72) Erfinder: Bauer, Kurt Heinz, Prof. Dr., Im Finkeler 4,
D-7800 Freiburg 33 (DE)
Erfinder: Ghyczy, Miklos, Dr., Am Serviesberg 12,
D-5000 Köln 41 (DE)
Erfinder: Etschenberg, Eugen, Dr., Hirseweg 10,
D-5000 Köln 41 (DE)
Erfinder: Osthoff, Heinrich, Dr., Ronsdorfer Strasse 51,
D-5030 Hürth (DE)

(74) Vertreter: Redies, Bernd, Dr. rer. nat. et al, Redies,
Redies, Türk & Gille, Patentanwälte Brucknerstrasse 20,
D-4000 Düsseldorf 13 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue Blattdüngemittel, welche ein oder mehrere Makronährstoffe und/oder ein oder mehrere Mikronährstoffe und Phospholipide enthalten.

Neben den Bodendüngungen haben in den letzten Jahren die Blattdüngungen zunehmende Bedeutung erlangt. Es hat sich gezeigt, daß Pflanzennährstoffe besser ausgenutzt werden können und schneller wirken, wenn sie nicht zur Bodendüngung verwendet werden, sondern direkt auf die Pflanze bzw. das Blattwerk aufgebracht werden. Die üblichen Blattdüngungen haben jedoch eine Reihe von Nachteilen, die eine allgemeine Anwendung erschweren. Wenn man handelsübliche Blattdüngung in der für die Ernährung der Pflanze notwendigen Menge einsetzt, so kann es zu Verätzungen bzw. Verbrennungen der Blätter kommen, insbesondere in trockenen und sonnigen Anbaugegenden. Um diese Verbrennungen zu verhindern, muß die Nährstoffmenge reduziert werden, so daß keine ausreichende Düngung gewährleistet ist. Die Düngung muß mehrmals wiederholt werden, was einen hohen Arbeitsaufwand bedeutet. Auch werden die Nährstoffe oft, bevor sie in die Pflanze aufgenommen werden können, bereits durch Wind oder Regen von den Blättern abgetragen, so daß sie nicht in die Pflanze gelangen.

Aufgabe der vorliegenden Erfindung war es deshalb, eine neue Blattdüngung zu entwickeln, die das Aufbringen der Nährstoffe in ausreichender Menge auf die Pflanze sowie ein rasches Eindringen in die Pflanze gewährleistet.

Es wurde nun überraschend gefunden, daß man die Wirksamkeit üblicher Blattdüngemittel wesentlich verbessern kann, wenn man diesen 10—50% eines natürlichen oder synthetischen Phosphorlipids (bezogen auf die Nährstoffe insgesamt) aus der Gruppe Phosphatidylcholin, den hydrierten Phosphatidylcholinen, Phosphatidylethanolamin, den N-Acyl-phosphatidylethanolaminen, Phosphatidylinosit, Phosphatidylserin, Lysolecithin oder Phosphatidylglycerol zusetzt.

Die neuen erfindungsgemäßen Blattdünger bilden bei der Auftragung auf die Pflanze einen dünnen Film, der die Nährstoffe auf der Pflanze festhält und einen raschen Eintritt in die Pflanze ermöglicht. Dadurch kommt es zu einer bersseren Ausnutzung der zugeführten Nährstoffe. Die Nährstoffe können nicht mehr durch Wind oder Regen von der Pflanze gespült werden. Auch ein Verbrennen oder Verätzen der Pflanze wird verhindert, da die Nährstoffe schneller durch das Blatt aufgenommen und verstoffwechselt werden.

Die neuen Blattdüngemittel zeigen nur eine geringe Verdunstungseigenschaft, so daß es auch nicht zu einer Auskristallisation der Nährstoffe auf der Pflanze bzw. den Blättern führen kann.

Als Makronährstoffe bzw. Hauptnährstoffe können Stickstoffdünger, Phosphatdünger, Kalidünger oder Gemische angewendet werden. Als Stickstoffdünger kommen z. B. Ammoniumsulfat, Kalkammonsalpeter, Harnstoff, Harnstoff-Aldehyd-Kondensate, Stickstoffmagnesia, Ammonsulfatsalpeter, Kalksalpeter oder Calciumcyanamid in Frage.

Als Phosphatdünger z. B.: Superphosphat, Doppelsuperphosphat, Tripelsuperphosphat, Thomasmehl, Thomasphosphat, Glühphosphat, Rhenaniaphosphat, Dicalciumphosphat oder Rohphosphat.

Als Kalidünger z. B.: Kaliumchlorid, Kaliumsulfat, Kaliummagnesia.

Als weitere Hauptnährstoffe z. B.: Calciumcarbonat, wie Kalkstein oder Kreide; Calciumoxid; Magnesiumoxid; Kieserit oder Dolomit.

Auch können organische Bestandteile zugemischt werden: Guano, Fischmehl, Knochenmehl, Lignin oder Torf. Als Spurenelemente, d. h. Mikronährstoffe kommen Mangan, Zink, Eisen oder Kupfer, wie z. B. Zinkoxide, Zinksulfate, Zinkcarbonate, Kupferoxide, Molybdänsulfate oder Borate in Frage.

Als Phospholipide kommen z. B. die im Handel erhältlichen Phosphatidylcholine oder Phosphatidylcholin-Mischprodukte, wie z. B.

| Phospholipin[R] 25 | (25% Phosphatidylcholin |
| | 25% Phosphatidylethanolamin |
| | 20% Phosphatidylinosit) |
| Phospholipon[R] 38 | (38% Phosphatidylcholin |
| | 16% N-Acylphosphatidylethanolamin |
| | 4% Phosphatidylethanolamin) |
| Phospholipon[R] 55 | (55% Phosphatidylcholin |
| | 25% Phosphatidylethanolamin |
| | 2% Phosphatidylinosit) |
| Phospholipon[R] 80 | (80% Phosphatidylcholin |
| | 10% Phosphatidylethanolamin) |
| Phospholipon[R] 100 | (96% Phosphatidylcholin) |
| Phospholipon[R] 100H | (96% hydriertes Phosphatidylcholin) |

in Frage.

Besonders bevorzugt sind natürliche Phosphatidylcholine, die nach den in den folgenden Patentschriften beschriebenen Verfahren erhalten werden können: DE-C 1 047 597, DE-C 1 053 299, DE-C 1 617 679, DE-C 1 617 680, deutsche Patentanmeldung DE-A 3 047 048.5, DE-A 3 047 012.3 oder DE-A

3 047 011.2.

Als N-Acyl-phosphatidylethanolamine kommen insbesondere diejenigen in Betracht, in denen die Acylgruppe sich von gesättigten oder olefinisch ungesättigten Fettsäuren mit 2—20 Kohlenstoffatomen, insbesondere die gesättigten mit 2—5 Kohlenstoffatomen oder die gesättigten oder einmal olefinisch ungesättigten mit 14, 16, 18 oder 20 Kohlenstoffatomen herleitet.

Die neuen Blattdüngemittel können nach verschiedenen Verfahren erhalten werden.

Die entsprechenden Makronährstoffe und/oder Mikronährstoffe werden mit üblichen Hilfsstoffen gemischt und mit der entsprechenden Menge Phospholipid vermahlen. Das erhaltene Pulver bzw. Granulat kann in Wasser emulgiert oder suspendiert werden. Die entsprechenden Makronährstoffe und/oder Mikronährstoffe werden mit üblichen Hilfsstoffen gemischt und nach üblichen Verfahren, z. B. im Wirbelschichtverfahren, mit Phospholipiden besprüht. Das erhaltene Produkt kann zur Anwendung in Wasser emulgiert oder suspendiert werden. Die entsprechenden Makronährstoffe und/oder Mikronährstoffe werden mit üblichen Hilfsstoffen in Wasser gelöst, ggfs. unter Zusatz mit Polyolen, wie z. B. Glycerin, Propylenglycol, Ethylenglycol, Butylenglycol, oder aufgeschlämmt und unter Zugabe von Phospholipiden, die ggfs. in einem Lösungsmittel, wie z. B. niederaliphatische Alkohole, wie z. B. Methanol, Ethanol, Isopropanol, Butanol oder Isobutanol, oder Lösungsmittel, wie Hexan oder Dioxan, gelöst sein können, nach üblichen Verfahren emulgiert oder suspendiert.

Die erhaltenen Emulsionen oder Suspensionen können ggf. auch nach üblichen Verfahren, wie z. B. Sprüh- oder Gefriertrocknung, getrocknet werden und bei Bedarf wieder reemulgiert oder resuspendiert werden.

Die neuen Blattdüngemittel können auch hergestellt werden, indem die Phospholipide in einem Lösungsmittel, wie z. B. niederaliphatische Alkohole, wie z. B. Methanol, Ethanol, Isopropanol, Butanol oder Isobutanol, oder Lösungsmittel wie Hexan oder Dioxan, im Gew.-Verhältnis von 10 : 1 bis 10 : 5 gelöst und in das erhaltene Konzentrat die entsprechenden Makronährstoffe und/oder Mikronährstoffe sowie die üblichen Hilfsmittel eingerührt werden, das Lösungsmittel abgezogen und die erhaltene plastische Masse vermahlen wird. Das erhaltene Pulver oder Granulat kann zur Anwendung in der benötigten Menge Wasser emulgiert oder suspendiert werden. Als übliche Hilfsstoffe kommen Chelatbildner, Füllstoffe, Sprungmittel oder Emulgatoren in Frage.

Als Chelatbildner kommen Substanzen, wie z. B. Ethylendiamintetraessigsäuredinatriumsalz, Hydroxyethylendiamintriessigsäurenatriumsalz, Lignolsulfonverbindungen, Polykatechinsulfitgerbstoffe, Acetonitril oder Ethylendioxyphenolaminessigsäure in Frage.

Als Fixative können Stoffe, wie z. B. Polyvinylpyrrolidon oder Celluloseether eingearbeitet werden.

Des weiteren können ggfs. pflanzliche Öle zugesetzt werden wie z. B. Sojaöl, Sonnenblumenöl oder Rapsöl.

Die neuen Blattdüngemittel enthalten 10—50% Gew.-% Phospholipid, bezogen auf die Nährstoffmenge.

Die neuen Blattdüngungen können allein oder mit üblichen Pflanzenschutzmittel-Lösungen, wie Insektiziden, Herbiziden oder Fungiziden, Emulsions- oder Suspensionskonzentraten gemischt und nach üblichen Verfahren mit der notwendigen Wassermenge verdünnt, z. B. mit gebräuchlichen ULV-Applikationseinrichtungen, sowohl vom Flugzeug als auch durch Bodengeräte ausgebracht werden. Die Ausbringung kann auch über Verregnungsanlagen erfolgen. Die neuen Blattdüngungen eignen sich besonders als verdünnte Spritzbrühen, ggfs. unter Zusatz von Unkraut- oder Schädlingsbekämpfungsmitteln beim Obst-, Gemüse-, Wein-, Getreide-, Zuckerrüben-, Mais-, Baumwoll-, Tabak- oder Kaffeeanbau.

## Beispiel 1

### Herstellung eines Emulsionskonzentrates

| | |
|---|---|
| Kobaltsulfat | 0,05 g |
| Kupfersulfat | 0,015 g |
| Zinksulfat | 0,015 g |
| Borax | 0,015 g |
| Mangansulfat | 0,061 g |
| Magnesiumsulfat | 0,408 g |
| EDTA-Na | 0,750 g |
| $NH_4HSO_4$ | 6,63 g |
| Harnstoff | 22,45 g |

werden in 80 ml Wasser gelöst und mit 40 g Glycerin vermischt. Zu der erhaltenen Mischung gibt man 30 g Phospholipid (in 30—40 g Ethanol gelöst) und vermischt gut. Die erhaltene Mischung kann mit Wasser verdünnt direkt ausgebracht oder auch nach üblichen Verfahren getrocknet werden. Das erhaltene Granulat ist bei Bedarf zu redispergieren.

**0 095 071**

### Beispiel 2

| | |
|---|---|
| Kobaltsulfat | 0,05 g |
| Kupfersulfat | 0,015 g |
| Zinksulfat | 0,015 g |
| Borax | 0,015 g |
| Mangansulfat | 0,061 g |
| Magnesiumsulfat | 0,408 g |
| EDTA-Na | 0,750 g |
| NH₄HSO₄ | 6,630 g |
| Harnstoff | 22,450 g |

werden in 40 ml Wasser gelöst, dazu werden 80 g Glycerin und 40 g 1,2-Propylenglykol gemischt. Zu der erhaltenen Mischung gibt man 30 g Phospholipid, in 30—40 g Ethanol gelöst, und vermischt gut.

Gemäß Beispielen 1 und 2 können folgende Düngemittelkonzentrate hergestellt werden:

### Beispiel 3

| | |
|---|---|
| Kupfersulfat | 0,041 g |
| Zinksulfat | 0,023 g |
| Borax | 0,054 g |
| Mangansulfat | 0,105 g |
| Eisensulfat | 0,051 g |
| Molybdänsulfat | 0,004 g |
| Magnesiumoxid | 2 g |
| Kaliumoxid | 10 g |
| NH₄HSO₄ | 10 g |
| Harnstoff | 10 g |
| Wasser | 80 ml |
| Phospholipid | 30 g |
| Ethanol | 40 g |

### Beispiel 4

| | |
|---|---|
| Harnstoff | 6,7 g |
| Ammoniumsulfat | 13,3 g |
| Thomasphosphat | 5 g |
| Kaliumoxid | 10 g |
| Magnesiumoxid | 1 g |
| Eisensulfat | 0,1 g |
| Borax | 0,05 g |
| Kupfersulfat | 0,02 g |
| Mangansulfat | 0,05 g |
| Zinksulfat | 0,01 g |
| Molibdänsulfat | 0,004 g |
| Wasser | 100 ml |
| Phospholipid | 40 g |
| Ethanol | 50 g |
| EDTA-Na | 0,7 g |

### Beispiel 5

| | |
|---|---|
| Harnstoff | 12,4 g |
| Dikaliumphosphat | 3,7 g |
| Wasser | 60 ml |
| Phospholipid | 25 g |
| Ethanol | 40 g |

4

## Beispiel 6

| | |
|---|---|
| Harnstoff | 24 g |
| Dikaliumphosphat | 17 g |
| Ammoniumhydrogenphosphat | 7 g |
| Eisen(II)monanatriumsalz | 11 g |
| EDTA-Na | 0,8 g |
| Phospholipid | 40 g |
| Ethanol | 50 g |
| Ethylenglycol | 30 g |

## Beispiel 7

### Herstellung einer Emulsion

| | |
|---|---|
| Harnstoff | 3,2000 g |
| Ammoniumnitrat | 4,3000 g |
| di-Ammoniumhydrogenphosphat | 15,0000 g |
| Kaliumnitrat | 13,0000 g |
| Borax | 0,0410 g |
| Eisensulfat | 0,0410 g |
| Kobaltsulfat | 0,0008 g |
| Kupfersulfat | 0,0164 g |
| Mangansulfat | 0,0353 g |
| Ammoniummolibdat | 0,0014 g |
| Zinksulfat | 0,0120 g |
| Ethylendiamintetraessigsäure-Dinatriumsalz | 0,5000 g |
| Wasser | 98,3521 g |
| Phospholipid | 10,0000 g |
| Alkohol | 3,0000 g |
| Emulgator (Glycerin-Polyethylenglykolrizinoleat) | 2,5000 g |

Die Salze werden in Wasser gelöst mit der Phospholipid-Alkohol-Lösung und dem Emulgator gut gemischt.

## Beispiel 8

### Herstellung einer Suspension

| | |
|---|---|
| Harnstoff | 9,7000 g |
| Ammoniumnitrat | 16,6000 g |
| Kaliumnitrat | 32,0000 g |
| Magnesiumoxyd | 3,0000 g |
| Calciumoxyd | 10,0000 g |
| Borax | 0,1330 g |
| Eisensulfat | 0,0710 g |
| Kobaltsulfat | 0,0007 g |
| Kupfersulfat | 0,0500 g |
| Mangansulfat | 0,1820 g |
| Ammoniummolibdat | 0,0020 g |
| Zinksulfat | 0,0330 g |
| EDTA-Na | 0,5000 g |
| Wasser | 65,2283 g |
| Phospholipid | 10,0000 g |
| Emulgatoren (Gemisch aus hydriertem Rizinusöl, etoxyliert + Glycerin-Polyethylenglykolricinoleat) | 2,5000 g |

Die Stoffe werden zusammengegeben, in einer Mühle ca. 10—60 Minuten bei 20—50°C vermahlen und dann in Wasser suspendiert.

Beispiel 9

Herstellung eines Granulats

| | |
|---|---|
| Harnstoff | 11,8000 g |
| Ammoniumnitrat | 15,7000 g |
| di-Ammoniumhydrogenphosphat | 9,3000 g |
| Kaliumnitrat | 15,2260 g |
| Borax | 0,1500 g |
| Eisensulfat | 0,0500 g |
| Kobaltsulfat | 0,0080 g |
| Kupfersulfat | 0,0400 g |
| Mangansulfat | 0,2000 g |
| Ammoniummolibdat | 0,0010 g |
| Zinksulfat | 0,0250 g |
| EDTA-Na | 0,5000 g |
| Phospholipid | 20,0000 g |
| Emulgator | 5,0000 g |
| Bentonit | 10,0000 g |
| Ligninsulfonat | 5,0000 g |
| Polyvinylpyrrolidon | 7,0000 g |

Die Stoffe werden gut gemischt und nach üblichen Verfahren granuliert. Das erhaltene Granulat wird vor der Applikation in Wasser redispergiert.

## Patentansprüche

1. Blattdüngemittel, enthaltend ein oder mehrere Makronährstoffe und/oder ein oder mehrere Mikronährstoffe, dadurch gekennzeichnet, daß es 10—50 Gew.-% eines oder mehrerer natürlicher oder synthetischer Phospholipide (bezogen auf die Närstoffe insgesamt) aus der Gruppe Phosphatidylcholin, den hydrierten Phosphatidylcholinen, Phosphatidylethanolamin, den N-Acyl-phosphatidylethanolaminen, Phosphatidylinosit, Phosphatidylserin, Lysolecithin oder Phosphatidylglycerol enthält.

2. Blattdüngemittel gemäß Anspruch 1, dadurch gekennzeichnet, daß es als Granulat vorliegt.

3. Blattdüngemittel gemäß Anspruch 1, dadurch gekennzeichnet, daß es als wäßrige Emulsion oder Suspension vorliegt.

4. Blattdüngemittel gemäß Anspruch 1—3, dadurch gekennzeichnet, daß als Phospholipid Phosphatidylcholin oder Gemische aus Phosphatidylcholin und Phosphatidylethanolamin eingesetzt wird.

5. Verfahren zur Herstellung von Blattdüngemittel gemäß Anspruch 1—4, dadurch gekennzeichnet, daß man die entsprechenden Nährstoffe in Gegenwart von üblichen Hilfsmitteln mit den entsprechenden Mengen eines oder mehrerer der Phospholipide vermahlt und das erhaltene Pulver oder Granulat bei Bedarf in Wasser emulgiert oder suspendiert, oder die entsprechenden Nährstoffe im Gemisch mit üblichen Hilfsstoffen im Wirbelschichtverfahren mit dem oder den Phospholipiden besprüht und die erhaltenen Produkte ggfs. in Wasser emulgiert oder suspendiert, oder die entsprechenden Nährstoffe ggfs. in Gegenwart üblicher Hilfsstoffe in Wasser löst oder aufschlämmt und unter Zugabe von dem oder den Phospholipiden, die ggfs. in einem Lösungsmittel, wie z. B. niederaliphatische Alkohole oder Hexane oder Dioxane, gelöst sind, nach üblichen Verfahren emulgiert oder suspendiert, oder indem man die Nährstoffe ggfs. im Gemisch mit üblichen Hilfsmitteln in eine Phospholipidlösung, bestehend aus einem oder mehreren Phospholipiden aus der Gruppe Phosphatidylcholin, den hydrierten Phosphatidylcholinen, Phosphatidylethanolamin, N-Acylphosphatidylethanolaminen, Phosphatidylinosit, Phosphatidylserin, Lysolecithin und Phosphatidylglycerol und einem organischen Lösungsmittel, einrührt, das Lösungsmittel abzieht und die erhaltene plastische Masse vermahlt und das erhaltene Pulver oder Granulat ggfs. in Wasser emulgiert oder suspendiert.

6. Verfahren zur Düngung von Pflanzen, dadurch gekennzeichnet, daß man sie mit einer wäßrigen Emulsion oder Suspension, bestehend aus einem oder mehreren Makronärstoffen und/oder einem oder mehreren Mikronährstoffen, sowie 10—50 Gew.-% eines oder mehrerer natürlicher oder synthetischer Phospholipide (bezogen auf die Nährstoffe insgesamt) aus der Gruppe Phosphatidylcholin, den hydrierten Phosphatidylcholinen, Phosphatidylethanolamin, den N-Acylphosphatidylethanolaminen, Phosphatidylinosit, Phosphatidylcerin, Lysolecithin und Phosphatidylglycerol besprüht.

**Claims**

1. Foliage fertiliser containing one or more macronutrients and/or on or more micronutrients, characterised in that it contains 10 to 50% by weight (referred to total nutrients) of one or more natural or synthetic phospholipides from the group of phosphatidyl choline, the hydrogenated phosphatidyl cholines, phosphatidyl ethanolamine, the N-acyl phosphatidyl ethanolamines, phosphatidyl inositol, phosphatidyl serine, lysolecithine and phosphatidyl glycerol.

2. Foliage fertiliser according to claim 1, characterised in that it comprises a granulate.

3. Foliage fertiliser according to claim 1, characterised in that it comprises an aqueous emulsion or suspension.

4. Foliage fertiliser according to claims 1 to 3, characterised in that the phospholipid in phosphatidyl choline or mixtures of phosphatidyl choline and phosphatidyl ethanolamine.

5. Process for the preparation of foliage fertiliser according to claims 1 to 4, characterised in that the relevant nutrients are ground, in the presence of conventional adjuvants, with the relevant amounts of one or more phospholipids, and the resulting powder or granulate is emulsified or suspended in water as required, or the relevant nutrients, mixed with conventional adjuvants, are sprayed with phospholipids in a fluidised bed process, and the resulting products, if desired, are emulsified or suspended in water, or the relevant nutrients, in the presence of conventional adjuvants if desired, are dissolved or slurried in water and emulsified or suspended according to conventional procedures with addition of the one or more phospholipids, the latter, if desired, being dissolved in a solvent such as lower aliphatic alcohols or hexane or Dioxan, or the nutrients, mixed if desired with conventional adjuvants, are stirred into a phospholipid solution, consisting of one or more phospholipids from the group of phosphatidyl choline, the hydrogenated phosphatidyl cholines, phosphatidyl ethanolamine, the N-acyl phosphatidyl ethanolamines, phosphatidyl inositol, phosphatidyl serine, lysolecithine and phosphatidyl glycerol and an organic solvent, the solvent is removed and the resulting plastic mass is ground and the resulting powder or granulate is, if desired, emulsified or suspended in water.

6. Method for fertilising plants, characterised in that they are sprayed with an aqueous emulsion or suspension consisting of one or more macronutrients and/or one or more micronutrients, as well as 10 to 50% by weight of one or more natural or sythetic phospholipids (referred to total nutrients) from the group of phosphatidyl choline, the hydrogenated phosphatidyl cholines, phosphatidyl ethanolamine, the N-acyl phosphatidyl ethanolamines, phosphatidyl inositol, phosphatidyl serine, lysolecithine and phosphatidyl glycerol.

**Revendications**

1. Engrais foliaire contenant une ou plusieurs macrosubstances nutritives et/ou une ou plusieurs microsubstances nutritives, caractérisé en ce qu'il contient de 10 à 50% en poids d'un ou plusieurs phospholipides naturels ou synthétiques (par rapport aux substances nutritives totales) du groupe consistant en la phosphatidylcholine, les phosphatidylcholines hydrogénées, la phosphatidyléthanolamine, les N-acyl-phosphatidyléthanolamines, le phosphatidylinositol, la phosphatidylsérine, la lysolécithine ou le phosphatidylglycérol.

2. Engrais foliaire selon la revendication 1, caractérisé en ce qu'il est à l'étant de granulés.

3. Engrais foliaire selon la revendication 1, caractérisé en ce qu'il est à l'état d'émulsion ou suspension aqueuse.

4. Engrais foliaire selon les revendications 1 à 3, caractérisé en ce qu'il contient en tant que phospholipide la phosphatidylcholine ou un mélange de phosphatidylcholine et de phosphatidyléthanolamine.

5. Procédé de préparation des engrais foliaires selon les revendications 1 à 4, caractérisé en ce que l'on broie les substances nutritives mises en oeuvre en présence de produits auxiliaires usuels avec les quantités voulues d'un ou plusieurs des phospholipides et, lorsque c'est nécessaire, on met le poudre ou substance granuleuse obtenue en émulsion ou suspension dans l'eau, ou bien on applique sur les substances nutritives mises en oeuvre mélangées avec les produits auxiliaires usuels, par pulvérisation selon la technique du lit tourbillonnaire, le ou les phospholipides et on émulsionne ou on met en suspension éventuellement les produits obtenus dans l'eau, ou bien on dissout ou on disperse les substances nutritives mises en oeuvre, éventuellement en présence de produits auxiliaires usuels, dans l'eau, et on émulsionne ou on met en suspension par des techniques usuelles en ajoutant le ou les phospholipides éventuellement dissous dans un solvant, par exemple un alcool aliphatique inférieur ou l'hexane ou le dioxanne, ou bien on introduit sous agitation les substances nutritives, éventuellement en mélange avec des produits auxiliaires usuels, dans une solution de phospholipides consistant en un ou plusieurs phospholipides du groupe de la phosphatidylcholine, des phosphatidylcholines hydrogénées, de la phosphatidyléthanolamine, des N-acyl-phosphatidyléthanolamines, du phosphatidylinositol, de la phosphatidylsérine, de la lysolécithine et du phosphatidylclycérol et un solvant organique, on élimine le solvant et on broie la masse plastique obtenue et on émulsionne ou on met en suspension éventuellement dans l'eau la poudre ou substance granuleuse obtenue.

6. Procédé pour la fumure des végétaux, caractérisé en ce que l'on pulvérise par une émulsion ou suspension aqueuse consistant en une ou plusieurs macrosubstances nutritives et/ou une ou plusieurs microsubstances nutritives, et 10 à 50% en poids d'un ou plusieurs phospholipides naturels ou synthétiques (par rapport aux substances nutritives totales) du groupe de la phosphatidylcholine, des phosphatidylcholines hydrogénées, de la phosphatidyléthanolamine, des N-acyl-phosphatidyléthanolamines, du phosphatidylinositol, de la phosphatidylsérine, de le lysolécithine et du phosphatidylglycérol.